# EUROPÄISCHE PATENTANMELDUNG

(11) **EP 2 685 148 A1**
(43) Veröffentlichungstag der Anmeldung: **15.01.2014**
(21) Anmeldenummer: 13175848.4
(22) Anmeldetag: 10.07.2013
(51) Int. Cl.: F16N 7/32

(54) **Vorrichtung zum Versorgen von mindestens zwei Schmierstellen mit einem viskosen Schmierstoff**

(30) Priorität: 10.07.2012 DE 102012106187
(71) Anmelder: Rebs Zentralschmiertechnik GmbH, 40885 Ratingen (DE)
(72) Erfinder: Anheyer, Wolfgang, 41462 Neuss (DE)
(74) Vertreter: Cohausz & Florack

(57) **Zusammenfassung**

Eine erfindungsgemäße Vorrichtung zum Versorgen einer Schmierstelle (S1,S2) mit Schmierstoff umfasst eine Versorgungsleitung (5), eine Gasversorgung (4), die die Versorgungsleitung (5) mit einem Gasstrom (L) speist, eine Regeleinheit (6), die den durch die Versorgungsleitung (5) strömenden Gasstrom regelt und eine Schmierstoffeinspeisung (7), die einen Schmierstoffstrom (S) in die Versorgungsleitung (5) speist. Dabei treibt der Gasstrom (L) den Schmierstoffstrom (S) in der Versorgungsleitung (5) zu einem einer der Schmierstellen (S1,S2) zugeordneten Anschluss (2,3). Darüber hinaus ist eine Abströmleitung (11,12) vorgesehen, über die ein Schmierstoff-Gas-Strom (Gr) von der Schmierstelle (S1,S2) abströmt. Bei einer solchen Vorrichtung lässt sich mit einer auf ein Minimum reduzierten Gasströmung die Versorgung von Schmierstellen mit einer ausreichenden Schmierstoffmenge dadurch sichern, dass in der Abströmleitung (11,12,13) eine Drosseleinheit (15) vorgesehen ist, die den durch die Abströmleitung strömenden Schmierstoff-Gas-Strom (Gr) regelt.

## Beschreibung

Die Erfindung betrifft eine Vorrichtung zum Versorgen von mindestens zwei Schmierstellen mit einem viskosen Schmierstoff. Eine solche Vorrichtung ist beispielsweise aus der WO 2007/006692 A1 bekannt.

Vorrichtungen der hier in Rede stehenden Art werden beispielsweise in Schmiersystemen an Walzwerken, Stranggießanlagen oder Schienenfahrzeugen eingesetzt. Üblicherweise wird dabei ein den jeweiligen Anforderungen genügendes, hochviskoses Öl als Schmierstoff mittels des jeweiligen Gasstromes transportiert und auf eine Vielzahl von Schmierstellen aufgeteilt. Der Schmierstoff-Gas-Strom ergießt sich vollständig in die jeweils zu versorgende Schmierstelle hinein. Im Fall einer idealen Abdichtung verlassen Schmierstoff und Gas gleichermaßen vollständig die jeweilige Schmierstelle über eine Abströmleitung und können so der Wiederverwendung zugeführt werden. Ein sich dennoch einstellender Schmierstoffverbrauch ist als mechanisch-thermisch-chemische Alterung zu verstehen.

In der Praxis tritt allerdings ein unbekannter und veränderlicher Teil des in die Schmierstelle eintretenden Schmierstoffs und Gases als Leckage in die Umgebung aus. So wird bei Lagerschmierungen beispielsweise im Bereich der Wellendichtung aufgrund der dort herrschenden Relativbewegungen üblicherweise Schmierstoff aus dem Lager geschleppt. Infolge dieses Verlustes ist die Strömung in der von der jeweiligen Schmierstelle abführenden Abströmleitung gegenüber der Strömung in der Verbindungsleitung reduziert, über die der Schmierstoff-Gas-Strom zugeführt wird.

Bei dem für das Vorantreiben des Schmierstoffs verwendeten Gas handelt es sich in der Regel um Luft, die aus der Umgebung der Vorrichtung bezogen und in der Gasversorgung in für den jeweiligen Anwendungszweck ausreichender Weise druckbeaufschlagt wird. Der Druck des in das Schmiersystem eingespeisten Gasstroms wird dabei so eingestellt, dass der Gasstrom turbulent durch das Leitungssystem der Vorrichtung strömt.

Der in das Leitungssystem zusätzlich eingespeiste fließfähige Schmierstoff bildet in Folge der koaxial zum Leitungsverlauf gerichteten turbulenten Gasströmung einen dünnen Film auf den Leitungswänden aus. Dieser Schmierstofffilm wird aufgrund der Reibung zwischen den aneinander anliegenden Grenzschichten von Gasstrom und Schmierstoff sowie das Aufprallen der Gasströmung auf die sich auf dem Schmierstofffilm bildenden Wellenberge vorangetrieben, ohne dass es zu einer Vermischung der Gase mit dem Schmierstoff kommt. Der wesentliche Vorteil eines derartigen Transports von Schmierstoff zu den Schmierstellen besteht darin, dass der Transport auch kleinster Schmierstoffmengen weitestgehend lageunabhängig erfolgen kann. Indem zunächst eine für eine größere Zahl von zu versorgenden Schmierstellen ausreichende Gesamtmenge an Schmierstoff über eine gemeinsame Versorgungsleitung größerer Länge gefördert und dann mittels eines Verteilers auf die erforderliche Anzahl von Teilströmen aufgeteilt wird, lässt sich dabei ein einfacher leitungstechnischer Aufbau erreichen.

Um sicherzustellen, dass für die Versorgung der Schmierstellen stets ein ausreichender Schmierstoffstrom zur Verfügung steht, werden die in die Vorrichtung eingespeisten Schmierstoffströme in der Regel überdimensioniert. Die dadurch überschüssigen, nicht zur jeweiligen Schmierstelle gelangenden Schmierstoffmengen werden über Abströmleitungen von den Schmierstellen abgeführt. Sie können in einem Rücklauftank gesammelt und von dort einer Wiederverwendung zugeführt werden.

Der an den den zu versorgenden Schmierstellen zugeordneten Anschlüssen austretende Gasstrom lässt sich in der Regel nur mit großem Aufwand erfassen. Hinzu kommen die im praktischen Betrieb unvorhersehbaren Leckagen im Bereich der Schmierstellen, die beispielsweise bauartbedingt oder die Folge von Verschleiß oder Beschädigung sein können. Aus diesem Grund wird auch der in Vorrichtungen der hier in Rede stehenden Art eingespeiste Gasvolumenstrom üblicherweise stets mindestens so überdimensioniert, dass sich an den zu versorgenden Schmierstellen ein Überdruck bildet, um ein Eindringen von Verschmutzungen zuverlässig zu vermeiden.

Vor dem Hintergrund des voranstehend beschriebenen Standes der Technik bestand die Aufgabe der Erfindung darin, eine Vorrichtung der eingangs angegebenen Art zu schaffen, bei der einerseits die Versorgung der Schmierstellen mit einer ausreichenden Schmierstoffmenge gesichert ist und bei der andererseits der durch die Vorrichtung strömende Gasstrom auf ein Minimum reduziert ist.

Diese Aufgabe ist erfindungsgemäß durch eine Vorrichtung mit den in Anspruch 1 angegebenen Merkmalen gelöst worden.

Vorteilhafte Ausgestaltungen der Erfindung sind in den abhängigen Ansprüchen angegeben und werden nachfolgend wie der allgemeine Erfindungsgedanke im Einzelnen erläutert.

Eine erfindungsgemäße Vorrichtung zum Versorgen einer Schmierstelle mit einem viskosen Schmierstoff umfasst demnach:
- eine Versorgungsleitung,
- eine Gasversorgung zum Einspeisen eines Gasstroms in die Versorgungsleitung,
- eine Regeleinheit zum Regeln des durch die Versorgungsleitung strömenden Gasstroms,
- eine Schmierstoffeinspeisung zum Einspeisen eines Schmierstoffstroms in die Versorgungsleitung, wobei der durch die Versorgungsleitung strömende Gasstrom den in die Versorgungsleitung eingespeisten Schmierstoffstrom in der Versorgungsleitung zu einem der zu versorgenden Schmierstelle zugeordneten Anschluss vorantreibt,
   und
- eine Abströmleitung, über die ein Schmierstoff-Gas-Strom von der Schmierstelle abströmt.

Erfindungsgemäß ist nun in der Abströmleitung eine Drosseleinheit vorgesehen ist, die den durch die Abströmleitung strömenden Schmierstoff-Gas-Strom regelt.

Bei einer erfindungsgemäßen Vorrichtung kann somit mittels der zusätzlich vorgesehenen, in der Abströmleitung angeordneten Drosseleinheit der durch die Abströmleitung von der jeweils versorgten Schmierstelle abfließende Gasstrom so eingestellt werden, dass einerseits ein für die Versorgung der Schmierstelle und den dort gegebenenfalls einzustellenden Überdruck ausreichender Gasstrom auch dann gewährleistet ist, wenn ein minimierter Gasstrom in die erfindungsgemäße Vorrichtung eingespeist wird. Dabei werden Leckagen und Ungleichförmigkeiten, zu denen es in den vor der erfindungsgemäß vorgesehenen Drosseleinheit vorhandenen Teilen der erfindungsgemäßen Vorrichtung kommen kann, berücksichtigt, ohne dass dazu besondere Überwachungen an den Stellen erforderlich sind, an denen es potenziell zu Leckagen oder Ungleichförmigkeiten bei der Ausbringung kommt.

Wenn hier von Schmierstellen die Rede ist, dann fallen darunter in der Praxis in der Regel Wälzlager oder Dichtungspakete, die jeweils über einen eigenen Schmierstoff-Gas-Anschluss verfügen. Dabei können beispielsweise mehrere Schmierstellen dieser Art in einem Lagergehäuse zusammengefasst sein und gemeinsam mit dem erforderlichen Schmierstoff-Gas-Strom versorgt werden. Da die erfindungsgemäß in der Abströmleitung angeordnete zweite Regeleinheit auf den durch die Abströmleitungen strömenden Gasstrom selbst abstellt, spielt es keine Rolle, wie viele Anschlüsse und sonstige Stellen, an denen es zu Leckagen kommen kann, in Strömungsrichtung des Gases vor der zweiten Regeleinheit vorhanden sind. Dementsprechend kann bei einer erfindungsgemäßen Vorrichtung problemlos mindestens einer der Schmierstellen eine Gruppe von zwei oder mehr Anschlüssen zugeordnet sein, oder es können in einem Gehäuse mehrere Schmierstellen zusammengefasst sein, die gemeinsam versorgt oder von denen über eine gemeinsame Abströmleitung der jeweils an der jeweiligen Schmierstelle nicht verbrauchte Schmierstoff-Gas-Strom abgeführt wird. Auch die bei solchen Gruppen von Anschlüssen oder gemeinsam versorgten Schmierstellen auftretenden Ungleichförmigkeiten werden bei einer erfindungsgemäßen Vorrichtung problemlos erfasst und ausgeglichen. Dabei können die Anschlüsse einer Gruppe beispielsweise in einem gemeinsamen Gehäuse angeordnet und gemeinsam mit der Versorgungsleitung verbunden sein.

Die Erfindung ermöglicht so auf denkbar einfache Weise eine an den jeweiligen Betriebszustand angepasste Regelung, durch die im Ergebnis der für den Betrieb erforderliche Gasvolumenstrom insgesamt reduziert und die Präzision, mit der die jeweilige Stelle versorgt wird, erhöht ist.

In Anwendungsfällen, in denen die zu erwartenden Leckagen und damit einhergehend der Verlust an Gasströmung in der jeweils zu versorgenden Schmierstelle bekannt sind, kann es dabei ausreichen, wenn die Drosseleinheit ungeregelt ist. Eine nicht regelbare Drosseleinheit kann auch dann zweckmäßig sein, wenn die Regelung des durch die Leitungen einer erfindungsgemäßen Vorrichtung strömenden Gasstroms mittels der Regeleinheit in Abhängigkeit von einer für den in der Abströmleitung strömenden Gasstrom charakteristischen Größe vorgenommen wird.

Die über die Betriebsdauer erzielte Genauigkeit der Versorgung der jeweiligen Schmierstelle und die damit einhergehende Reduzierung des benötigten Gasstroms können bei einer erfindungsgemäßen Vorrichtung dadurch weiter verbessert werden, dass sie eine Steuereinrichtung umfasst, die bei Abweichung einer für den durch die Abströmleitung strömenden Schmierstoff-Gas-Strom charakteristischen Größe von einem Sollwert ein Steuersignal abgibt.

Die von der Steuereinrichtung abgegebenen Signale können beispielsweise zur Steuerung der Regeleinrichtung genutzt werden. Bei einer entsprechenden Ausgestaltung der erfindungsgemäßen Vorrichtung gibt die Steuereinrichtung Steuersignale zum Verstellen der Regeleinheit ab. Indem die Steuerung der Regeleinheit in Abhängigkeit von der für den in der Abströmleitung strömenden Gasstrom erfassten Größe erfolgt, ist die mindestens eine durch die erfindungsgemäße Vorrichtung versorgte Schmierstelle mit den bei ihr auftretenden, nicht exakt zu quantifizierenden Leckagen Bestandteil der Regelstrecke.

Eine besonders vielseitige und gleichzeitig auf einfache Weise, insbesondere automatisch, an die jeweilige Betriebssituation anpassbare Ausgestaltung der erfindungsgemäßen Vorrichtung ergibt sich dann, wenn auch die erfindungsgemäß in der Abströmleitung vorgesehene Drosseleinheit regelbar ist.

Eine regelbare Drosseleinheit kann ebenfalls durch die optional vorgesehene Steuereinheit in Abhängigkeit von der jeweils erfassten, für den durch die Abströmleitung abströmenden Gasstrom charakteristischen Größe gesteuert werden. Bei dieser Ausgestaltung gibt dann die betreffende Steuereinrichtung Steuersignale zum Verstellen der Drosseleinheit ab, wenn dies unter Berücksichtigung der jeweils erfassten Größe erforderlich ist.

Gemäß einer weiteren Ausgestaltung der Erfindung ist eine Steuereinrichtung vorgesehen, die dann, wenn die jeweils erfasste, für den durch die Versorgungs-, Verbindungs- oder Abströmleitungen der Vorrichtung strömenden Gasstrom charakteristische Größe einen Mindestwert unterschreitet, ein Signal zum zeitlich begrenzten Anheben des durch die Versorgungsleitung einströmenden Gasstroms an die Regeleinheit abgibt. Auf diese Weise kann nach einer Unterschreitung eines für die Gasströmung geforderten Mindestwerts die im Leitungssystem möglicherweise angesammelte Schmierstoffmenge mit erhöhter Sicherheit abtransportiert werden.

Bei den voranstehend erwähnten, für den jeweiligen durch die Leitungen einer erfindungsgemäßen Vorrichtung strömenden Gasstrom charakteristischen Größe kann es sich jeweils um den Druck, den Massenstrom oder den Volumenstrom handeln.

Die in die erfindungsgemäße Vorrichtung eingebrachte Schmierstoffmenge kann ebenfalls an die jeweiligen Anforderungen angepasst und auf diese Weise minimiert werden. Zu diesem Zweck kann bei einer erfindungsgemäßen Vorrichtung die Schmierstoffeinspeisung regelbar und eine Steuereinrichtung vorgesehen sein, die in Abhängigkeit von der Bedarfsdauer, über die die Schmierstellen mit Schmierstoff zu versorgen sind, ein Signal zum Einspeisen von Schmierstoff an die Schmierstoffeinspeisung abgibt.

Für bestimmte Anwendungsfälle kann es erforderlich sein, beispielsweise einen aus einem inerten Gas oder Gasgemisch bestehenden Gasstrom in eine erfindungsgemäße Vorrichtung einzuspeisen. In den meisten Fällen wird es jedoch ausreichen, wenn die Gasversorgung, wie beim Stand der Technik, einen Druckluftstrom in die Versorgungsleitung einspeist.

Grundsätzlich ist es möglich, die Regeleinheit, über die der Zustrom von Gas in die Versorgungsleitung geregelt wird, an einer Stelle in der Versorgungsleitung anzuordnen, an der der Schmierstoff und der Gasstrom bereits zu der Schmierstoff-Gas-Strömung zusammengeführt worden sind. In diesem Fall sitzt die Regeleinheit in Strömungsrichtung hinter der Einspeisung, über die der Schmierstoff in die Versorgungsleitung eingebracht wird. Eine besonders robuste und betriebssichere Ausgestaltung der Erfindung ergibt sich jedoch dann, wenn die Schmierstoffeinspeisung in Strömungsrichtung des Gasstroms hinter der Regeleinheit angeordnet ist. Auf diese Weise bleibt die Regeleinheit weitestgehend frei von Schmierstoff, so dass das Risiko einer seine Funktion möglicherweise störenden Verschmutzung minimiert ist.

Die Regeleinheit kann den Druck, den Massen- oder den Volumenstrom des durch die Versorgungsleitung strömenden Gasstroms regeln, wobei selbstverständlich auch eine kombinierte Regelung dieser Größen möglich ist. Hierzu kann die Regeleinheit beispielsweise als Proportionaldruckregler ausgestaltet sein.

Die erfindungsgemäße Vorrichtung erweist sich schon dann als zweckmäßig, wenn sie zum Versorgen einer einzigen Schmierstelle eingesetzt wird, die auf direktem Wege über die Versorgungsleitung mit dem erforderlichen Schmierstoff-Gas-Strom versorgt wird und von der alleine der nicht verbrauchte Schmierstoff-Gas-Strom über eine Abströmleitung abgeführt wird. Besonders vorteilhaft erweist sich die Erfindung jedoch dann, wenn die erfindungsgemäße Vorrichtung zum Versorgen von zwei oder mehr Schmierstellen eingesetzt wird. In diesem Fall kann eine gleichmäßige Aufteilung des Schmierstoff-Gas-Stroms dadurch erreicht werden, dass ein Verteiler zum Aufteilen des durch die Versorgungsleitung strömenden Schmierstoff-Gas-Stroms auf zwei oder mehr Anschlüsse vorgesehen ist, die zwei oder mehr mit Schmierstoff zu versorgenden Schmierstellen zugeordnet sind. Für diesen Zweck geeignete Verteiler sind an sich bekannt (EP 0 902 868 B1) und werden seit vielen Jahren erfolgreich eingesetzt.

In Fällen, in denen die erfindungsgemäße Vorrichtung zwei oder mehr Anschlüsse zum Versorgen jeweils einer zugeordneten Schmierstelle umfasst, ist es grundsätzlich denkbar, mehrere Abströmleitungen getrennt voneinander abzuführen und in jeder Leitung eine eigene Drosseleinheit anzuordnen, die den abströmenden Gasstrom in geeigneter Weise einstellt. Eine besonders einfache und kostengünstige Ausgestaltung der Erfindung ergibt sich jedoch dadurch, dass die von den zu versorgenden Schmierstellenden wegführenden Abströmleitungen zunächst zu einer gemeinsamen Abströmleitung zusammengeführt werden und eine einzige Drosseleinheit in der gemeinsamen Abströmleitung sitzt.

Im Fall, dass mit einer erfindungsgemäßen Vorrichtung zwei oder mehr Schmierstellen mit Schmierstoff versorgt werden sollen, muss nicht notwendig bei jeder Schmierstelle der an der betreffenden Schmierstelle nicht verbrauchte Schmierstoff-Gas-Strom über eine Abströmleitung abgeführt werden. Vielmehr kann es zweckmäßig sein, bei einzelnen Schmierstellen dauerhaft oder temporär die Abströmleitung zu verschließen oder gar keine Abströmleitung vorzusehen, so dass dort der gesamte zu der betreffenden Schmierstelle gelangende Schmierstoffstrom-Gas-Strom aus der jeweiligen Schmierstelle austritt. Dies kann zweckmäßig sein, wenn dauerhaft oder zeitweise eine maximale Versorgung der betreffenden Schmierstelle mit Schmierstoff gewährleistet werden soll. Gleichzeitig kann durch den vergleichbar großen Gaszufluss in der Schmierstelle ein Überdruck aufgebaut werden, der zum einen das Eindringen von Verschmutzungen von außen verhindert und zum anderen zur Schmierwirkung beiträgt.

Die Wiederverwendung des von der jeweiligen Schmierstelle über die jeweilige Abströmleitung abtransportierten Schmierstoff-Gas-Stroms kann dadurch vereinfacht werden, dass die Abströmleitung in einem Rücklauftank zum Sammeln von an der jeweils zu versorgenden Schmierstelle überschüssigem Schmierstoff mündet. Im Rücklauftank wird der von der Schmierstelle abgeleitete Schmierstoff gesammelt und kann so auf einfache Weise einer Aufbereitung und Wiederverwendung zugeführt werden.

Die erfindungsgemäß in der Abströmleitung angeordnete Drosseleinheit kann den durch die erfindungsgemäße Vorrichtung strömenden Gasstrom auf unterschiedliche Weise einstellen. So kann es zweckmäßig sein, wenn die Drosseleinheit den Differenzdruck zwischen dem innerhalb der Abströmleitung herrschenden Druck und dem Umgebungsdruck regelt. Dies ist dann angezeigt, wenn die Abströmleitung in einem offenen System mündet, in dem Umgebungsdruck herrscht. Es ist jedoch auch denkbar, dass die Abströmleitung beispielsweise in einem Rücklauftank mündet, der gegenüber der Umgebung abgeschlossen ist und in dem ein von dem Umgebungsdruck abweichender Druck herrscht. Dies kann beispielsweise zweckmäßig sein, wenn zum Vorantreiben des Schmierstoffs ein anderes Gas als Luft verwendet wird. In diesem Fall regelt die Drosseleinheit den Differenzdruck zwischen dem innerhalb der Abströmleitung herrschenden Druck und dem innerhalb des Rücklauftanks herrschenden Druck, um einerseits die für die Rückführung des überschüssigen Schmierstoffs erforderliche Gasströmung aufrechtzuerhalten, andererseits diese Gasströmung auf das jeweils erforderliche Minimum zu reduzieren.

Sollte es in Folge von Toleranzen oder einer systembedingten Trägheit der durch die erfindungsgemäß vorgesehene zweite Regeleinheit vorgenommenen Regelung dazu kommen, dass zeitweilig eine zu geringe Gasströmung durch die erfindungsgemäße Vorrichtung strömt, so kann einem dadurch möglicherweise eintretenden Stau von Schmierstoff im Leitungssystem der Vorrichtung zum einen dadurch vorgebeugt werden, dass die Versorgungsleitung einen in Strömungsrichtung vor dem Verteiler angeordneten, tieferliegenden Abschnitt umfasst, der in Schwerkraftrichtung gesehen unterhalb des Niveaus verläuft, auf dem der Verteiler angeordnet ist. Der bei temporär zu geringem Gasstrom in die Versorgungsleitung eingespeiste Schmierstoff sammelt sich in dem tieferliegenden Abschnitt und wird, sobald wieder eine ausreichende Gasströmung herrscht, aus diesem Abschnitt mitgenommen. Alternativ oder ergänzend ist es zum selben Zweck möglich, in der Versorgungsleitung in Strömungsrichtung vor dem Verteiler eine Sammelstelle vorzusehen, an der sich in die Versorgungsleitung eingespeister überschüssiger Schmierstoff sammelt und von wo diese angesammelte Schmierstoffmenge mitgenommen wird, sobald wieder ein ordnungsgemäßer Gasstrom strömt.

Nachfolgend wird die Erfindung anhand von Ausführungsbeispielen näher erläutert.

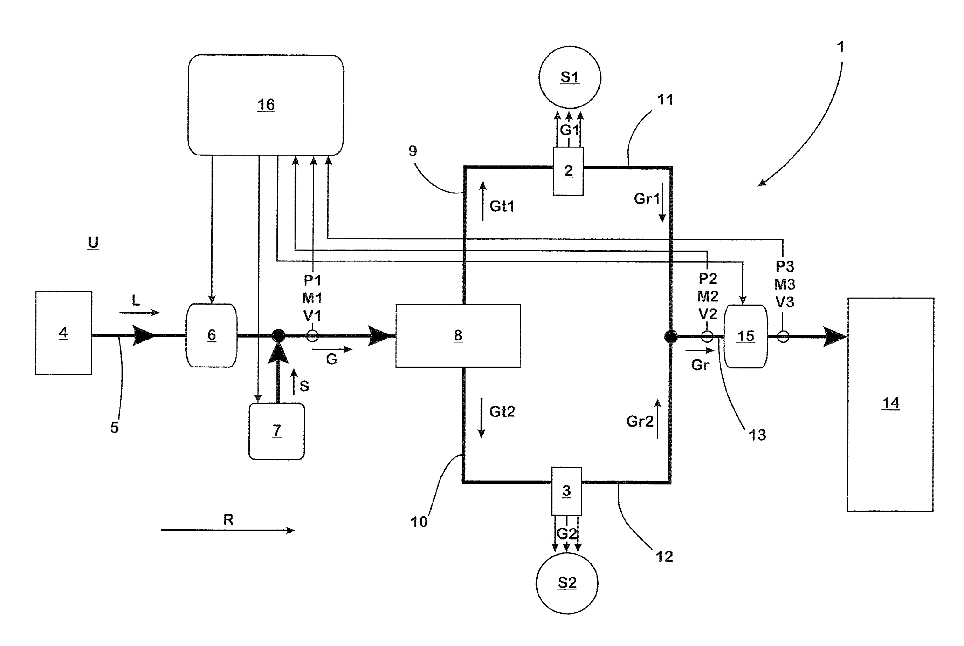

Die einzige Figur zeigt schematisch eine Vorrichtung 1 zum Versorgen von zwei Schmierstellen S1,S2 mit einem in Form eines Öls vorliegenden, hoch viskosen Schmierstoff. Jeder der Schmierstellen S1,S2 ist jeweils ein Anschluss 2,3 der Vorrichtung 1 zugeordnet, die jeweils einen Schmierstoff-Gas-Strahl G1,G2 auf die zugeordnete Schmierstelle S1,S2 ausbringen.

Die Vorrichtung 1 umfasst des Weiteren eine Gasversorgung 4, die beim hier beschriebenen Ausführungsbeispiel in an sich bekannter Weise Luft aus der Umgebung U bezieht, auf einen ausreichenden Druck komprimiert und als Gasströmung L in eine Versorgungsleitung 5 einspeist.

In der Versorgungsleitung 5 ist eine Regeleinheit 6 angeordnet, die den Druck P1 und/oder den Volumenstrom M1 der in die Versorgungsleitung 5 einströmenden Gasströmung L regelt. In Strömungsrichtung R hinter der Regeleinheit 6 wird mittels einer regelbaren Schmierstoffeinspeisung 7 der jeweils benötigte Schmierstoffstrom S in die Versorgungsleitung 5 eingespeist. Der dort turbulent strömende Gasstrom L nimmt den in die Versorgungsleitung 5 eintretenden Schmierstoffstrom S mit, so dass in Strömungsrichtung R hinter der Einspeisung ein Schmierstoff-Gas-Strom G durch die Versorgungsleitung 5 strömt. Bei diesem Schmierstoff-Gas-Strom G wird der Schmierstoff von dem turbulent strömenden Gasstrom als dünner Film entlang der Innenwandflächen der Versorgungsleitung 5 in Strömungsrichtung R vorangetrieben.

Die Versorgungsleitung 5 mündet in einem Verteiler 8, in dem in an sich bekannter, beispielsweise in der EP 0 902 868 B1 beschriebenen Weise der Schmierstoff-Gas-Strom G in zwei gleiche Teilströme Gt1,Gt2 aufgeteilt wird. Die Teilströme Gt1,Gt2 strömen vom Verteiler 8 über jeweils eine Verbindungsleitung 9,10 zu den Anschlüssen 2,3.

Bei den den Anschlüssen 2,3 jeweils zugeordneten Schmierstellen S1,S2 kann es sich beispielsweise um Lager eines hier nicht dargestellten Walzgerüstes handeln, die nicht nur durch den durch die Vorrichtung 1 ausgebrachten Schmierstoff geschmiert, sondern auch durch den aus den Anschlüssen 2,3 jeweils austretenden Gasstrom gekühlt werden.

Der jeweils aus den Anschlüssen 2,3 ausgebrachte Teilstrom Gt1,Gt2 des Schmierstoff-Gas-Stroms G ergießt sich jeweils vollständig in die jeweilige Schmierstelle S1,S2. Der so in die betreffende Schmierstelle S1,S2 gelangende Schmierstoff schmiert die dort sich bewegenden Teile. Gleichzeitig bewirkt das in die Schmierstellen S1,S2 eintretende Gas die betreffenden Teile.

Die Teilströme Gr1,Gr2 der jeweils eingespeisten Teilströme Gt1,Gt2, die nicht in Folge von Alterungsprozessen oder Leckagen in der betreffenden Schmierstelle S1,S2 verloren gehen, werden über jeweils eine Abströmleitung 11,12 von den Schmierstellen S1,S2 abgeführt.

Die Abströmleitungen 11,12 sind in einem Abstand von den Schmierstellen S1,S2 zu einer gemeinsamen Abströmleitung 13 zusammengeführt, durch die der gesamte rücklaufende Schmierstoff-Gas-Strom Gr zu einem Rücklauftank 14 strömt.

In der gemeinsamen Abströmleitung 13 sitzt eine regelbare Drosseleinheit 15, die den in der gemeinsamen Abströmleitung 13 in Strömungsrichtung R vor der zweiten Regeleinheit 15 herrschenden Druck P2, den Volumenstrom V2 oder den Massenstrom M2 des dort strömenden Gasanteils des rücklaufenden Schmierstoff-Gas-Stroms Gr regelt. Die Regelung kann beispielsweise in Abhängigkeit vom Differenzdruck zwischen dem Druck P2 und dem in Strömungsrichtung R hinter der zweiten Regeleinheit 15 herrschenden Druck P3 erfolgen.

Zur Abstimmung der Funktionen der Regeleinheit 6 und der Drosseleinheit 15 sowie der regelbaren Schmierstoffeinspeisung 7 ist eine Steuereinheit 16 vorgesehen. Diese überwacht einerseits die Einschaltzeiten, über die die Schmierstellen S1,S2 mit Schmierstoff zu versorgen sind und gibt dementsprechend Steuersignale an die Schmierstoffeinspeisung 7 ab.

Ebenso überwacht die Steuereinheit 16, ob die Drücke P1,P2,P3, die Massenströme M1,M2,M3 oder die Volumenströme V1,V2,V3 der durch die Leitungen der Vorrichtung strömenden Gasströme jeweils oberhalb eines jeweils zugeordneten Mindestwerts liegen. Wird der betreffende Wert unterschritten, gibt die Steuereinheit 16 an die Regeleinheit 6 ein Signal ab, auf das hin die Regeleinheit den Druck P1, den Volumenstrom V1 oder den Massenstrom M1 des einströmenden Gasstroms L über einen begrenzten Zeitraum auf einen überhöhten Vorgabewert einstellt, so dass in den Leitungen der Vorrichtung zeitweilig angesammelter Schmierstoff beschleunigt abtransportiert wird. Anschließend wird die Regeleinheit 6 wieder so verstellt, dass insbesondere der Druck P2, der Volumenstrom V2 oder der Massenstrom M2 des durch die gemeinsame Abströmleitung 13 abströmenden Gasanteils des Schmierstoff-Gas-Stroms Gr in einem Sollwertbereich liegt, der einen minimalen Gasverbrauch bei gleichzeitig optimaler Versorgung der Schmierstellen S1,S2 gewährleistet.

### BEZUGSZEICHEN

- 1: Vorrichtung zum Versorgen von zwei Schmierstellen S1,S2
- 2,3: Anschlüsse
- 4: Gasversorgung
- 5: Versorgungsleitung
- 6: Regeleinheit
- 7: Schmierstoffeinspeisung
- 8: Verteiler
- 9,10: Verbindungsleitungen
- 11,12: Abströmleitungen
- 13: gemeinsame Abströmleitung
- 14: Rücklauftank
- 15: Drosseleinheit
- 16: Steuereinheit

- G: Schmierstoff-Gas-Strom
- G1,G2: Schmierstoff-Gas-Strahlen
- Gt1,Gt2: Teilströme
- Gr: rücklaufender Schmierstoff-Gas-Strom
- Gr1,Gr2: nicht in den Schmierstellen S1,S2 verbrauchter Anteil Gr1,Gr2 des jeweiligen Teilstroms Gt1,Gt2
- L: Gasströmung
- M1,M2,M3: Massenströme
- P1,P2,P3: Drücke
- V1,V2,V3: Volumenströme
- R: Strömungsrichtung
- S: Schmierstoffstrom
- S1,S2: Schmierstellen
- U: Umgebung

## Patentansprüche

1. Vorrichtung zum Versorgen einer Schmierstelle (S1,S2) mit einem viskosen Schmierstoff, umfassend
- eine Versorgungsleitung (5),
- eine Gasversorgung (4) zum Einspeisen eines Gasstroms (L) in die Versorgungsleitung (5),
- eine Regeleinheit (6) zum Regeln des durch die Versorgungsleitung (5) strömenden Gasstroms (L),
- eine Schmierstoffeinspeisung (7) zum Einspeisen eines Schmierstoffstroms (S) in die Versorgungsleitung (5), wobei der durch die Versorgungsleitung (5) strömende Gasstrom (L) den in die Versorgungsleitung (5) eingespeisten Schmierstoffstrom (S) in der Versorgungsleitung (5) zu einem der zu versorgenden Schmierstellen (S1,S2) zugeordneten Anschluss (2,3) vorantreibt,
und
- eine Abströmleitung (11,12), über die ein Schmierstoff-Gas-Strom (Gr) von der Schmierstelle (S1,S2) abströmt,
**dadurch gekennzeichnet, dass** in der Abströmleitung (11,12,13) eine Drosseleinheit (15) vorgesehen ist, die den durch die Abströmleitung strömenden Schmierstoff-Gas-Strom (Gr) regelt.

2. Vorrichtung nach Anspruch 1, **dadurch gekennzeichnet**, **das**s sie eine Steuereinrichtung (16) umfasst, die bei Abweichung einer für den durch die Abströmleitung (11,12,13) strömenden Schmierstoff-Gas-Strom (Gr) charakteristischen Größe (P2, M2, V2) von einem Sollwert ein Steuersignal abgibt.

3. Vorrichtung nach einem der voranstehenden Ansprüche, **dadurch gekennzeichnet, dass** die Drosseleinheit (15) regelbar ist.

4. Vorrichtung nach Anspruch 2 und 3, **dadurch gekennzeichnet, dass** die Steuereinrichtung ein Steuersignal zum Verstellen der Drosseleinheit (15) abgibt.

5. Vorrichtung nach einem der Ansprüche 2 bis 4, **dadurch gekennzeichnet, dass** die Steuereinrichtung (16) ein Steuersignal zum Verstellen der Regeleinheit (6) abgibt.

6. Vorrichtung nach einem der voranstehenden Ansprüche, **dadurch gekennzeichnet, dass** sie eine Steuereinrichtung (16) umfasst, die, wenn eine für den durch die Versorgungs-, Verbindungs- oder Abströmleitungen (9-13) der Vorrichtung (1) strömenden Gasstrom charakteristische Größe (P1,M1,V1;P2,M2,V2;P3,M3,V3) einen Mindestwert unterschreitet, ein Signal zum zeitlich begrenzten Anheben des durch die Versorgungsleitung (5) einströmenden Gasstroms (L) an die Regeleinheit (6) abgibt.

7. Vorrichtung nach einem der voranstehenden Ansprüche, **dadurch gekennzeichnet, dass** die Schmierstoffeinspeisung (7) regelbar ist und eine Steuereinrichtung (16) vorgesehen ist, die in Abhängigkeit von der Bedarfsdauer, über die Schmierstellen (S1,S2) mit Schmierstoff zu versorgen sind, ein Signal zum Einspeisen von Schmierstoff an die Schmierstoffeinspeisung (7) abgibt.

8. Vorrichtung nach einem der voranstehenden Ansprüche, **dadurch gekennzeichnet, dass** die Schmierstoffeinspeisung (7) in Strömungsrichtung (R) des Gasstroms (L) hinter der Regeleinheit (6) angeordnet ist.

9. Vorrichtung nach einem der voranstehenden Ansprüche, **dadurch gekennzeichnet, dass** die Gasversorgung (4) einen Druckluftstrom (L) in die Versorgungsleitung (5) einspeist.

10. Vorrichtung nach einem der voranstehenden Ansprüche, **dadurch gekennzeichnet, dass** ein Verteiler (8) zum Aufteilen des durch die Versorgungsleitung (5) strömenden Schmierstoff-Gas-Stroms (G) auf zwei oder mehr Anschlüsse (2,3) vorgesehen ist, die zwei oder mehr mit Schmierstoff zu versorgenden Schmierstellen (S1,S2) zugeordnet sind.

11. Vorrichtung nach Anspruch 10, **dadurch gekennzeichnet, dass** die Versorgungsleitung (5) einen in Strömungsrichtung (R) vor dem Verteiler (8) angeordneten, tieferliegenden Abschnitt umfasst, der in Schwerkraftrichtung gesehen unterhalb des Niveaus verläuft, auf dem der Verteiler (8) angeordnet ist.

12. Vorrichtung nach einem der voranstehenden Ansprüche, **dadurch gekennzeichnet, dass** die Drosseleinheit (15) den Differenzdruck zwischen dem innerhalb der Abströmleitung (11,12,13) herrschenden Druck (P2) und dem Umgebungsdruck (U) regelt.

13. Vorrichtung nach einem der voranstehenden Ansprüche, **dadurch gekennzeichnet, dass** die Abströmleitung (11,12,13) in einem Rücklauftank zum Sammeln von an der jeweils zu versorgenden Schmierstelle (S1,S2) überschüssigem Schmierstoff mündet.

14. Vorrichtung nach Anspruch 13, **dadurch gekennzeichnet, dass** die Drosseleinheit (15) den Differenzdruck zwischen dem innerhalb der Abströmleitung (13) herrschenden Druck (P2) und dem innerhalb des Rücklauftanks (14) herrschenden Druck (P3) regelt.

15. Vorrichtung nach einem der voranstehenden Ansprüche, **dadurch gekennzeichnet, dass** die Versorgungsleitung (5) in Strömungsrichtung (R) vor dem Verteiler (8) eine Sammelstelle passiert, an der sich in die Versorgungsleitung (5) eingespeister überschüssiger Schmierstoff sammelt.
